# EUROPEAN PATENT APPLICATION

(11) **EP 3 973 780 A1**
(43) Date of publication of application: **30.03.2022**
(21) Application number: 20198252.7
(22) Date of filing: 24.09.2020
(51) Int. Cl.: A23C 9/15, A23L 29/00, A23L 29/281, A23C 13/00, A23C 9/00, A23C 9/13

(54) **A METHOD OF PREPARING A READY-TO-CONSUME FOOD PRODUCT**

(71) Applicant: Glanbia Ireland Dac, R95 E866 Kilkenny (IE)
(72) Inventor: DOLLARD, Gráinne, Kilkenny, R95 E866 (IE); MORGAN, François, Kilkenny, R95 E866 (IE); Ó'COINCEANAINN, Máirtin, Kilkenny, R95 E866 (IE); O'BRIEN, Colm, Kilkenny, R95 E866 (IE)
(74) Representative: FRKelly

(57) **Abstract**

The present invention relates to a method of preparing a ready-to-consume food product. The ready-to-consume food product can be a ready-to-consume beverage, or the ready-to-consume food product can be used as a food supplement that can be incorporated, or used in the preparation of, a food item. The ready-to-consume food product provides the taste of and mouthfeel of a high fat ready-to-consume food product but has a lower fat content, so that the consumer has an increased perception of a creamy taste and texture of the food product.

## Description

### Field of the Invention

The present invention relates to a method of preparing a ready-to-consume food product. The ready-to-consume food product can be a ready-to-consume beverage, or the ready-to-consume food product can be used as a food supplement that can be incorporated, or used in the preparation of, a food item.

### Background to the Invention

With more consumers becoming health-conscious, demand in the ready-to-consume food product market is for a food product having a superior nutritional lipid profile, higher protein content, and which does not compromise on product taste and texture. It is generally accepted that low-fat ready-to-consume food products lack the rich, creamy flavour and mouth feel of ready-to-consume food products having high(er) fat content. There is a difficulty in achieving the precise balance between fat content and creamy flavour and texture. Therefore, there is a need for a ready-to-consume food product that provides the taste of and mouthfeel of a high fat ready-to-consume food product but has a low(er) fat content, so that the consumer has an increased perception of a creamy taste and texture of the food product.

### Summary of the Invention

According to a first aspect of the present invention, there is provided a method of preparing a ready-to-consume food product, the method comprising:
(a) providing a liquid protein concentrate;
(b) adding fat to the liquid protein concentrate; and
(c) adding a dairy ingredient to the liquid protein concentrate.

Preferably, the liquid protein concentrate is not a solid, optionally not a dry solid, protein concentrate. Further preferably, the liquid protein concentrate is not a powder protein concentrate.

Optionally, the liquid protein concentrate is a liquid dairy protein concentrate. Alternatively, the liquid protein concentrate is a liquid plant protein concentrate. Optionally, the liquid protein concentrate is a combination of liquid dairy protein concentrate and liquid plant protein concentrate.

Optionally, the liquid plant protein concentrate is a liquid almond milk protein concentrate, liquid coconut milk protein concentrate, liquid rice milk protein concentrate, liquid soy milk protein concentrate, liquid hemp milk protein concentrate, liquid oat milk protein concentrate, liquid pea milk protein concentrate, liquid peanut milk protein concentrate, or combination each thereof.

Preferably, the liquid protein concentrate is a liquid dairy milk protein concentrate. Further preferably, the liquid protein concentrate is a liquid skim dairy milk protein concentrate.

Optionally, the method comprises:
(a) providing a liquid dairy protein concentrate;
(b) adding fat to the liquid protein concentrate; and
(c) adding a dairy ingredient to the liquid protein concentrate.

In the present invention, the term "milk" and "dairy milk" are used synonymously. The term "cream" and "dairy cream" are used synonymously.

Optionally, the liquid dairy protein concentrate is a liquid cow milk protein concentrate, liquid water buffalo milk protein concentrate, liquid goat milk protein concentrate, liquid sheep milk protein concentrate, liquid camel milk protein concentrate, or combination each thereof.

Optionally, the liquid protein concentrate has a fat content of 0.1-6% (w/v) of the liquid protein concentrate. Further optionally, the liquid protein concentrate has a fat content of 0.1-2% (w/v) of the liquid protein concentrate. Alternatively, the liquid protein concentrate has a fat content of 3-6%, optionally 3-5%, further optionally 3-4% (w/v) of the liquid protein concentrate.

Preferably, the liquid protein concentrate has a fat content of less than 1% (w/v) of the liquid protein concentrate. Further preferably, the liquid protein concentrate has a fat content of less than 0.5% (w/v) of the liquid protein concentrate. Still further preferably, the liquid protein concentrate has a fat content of less than 0.3% (w/v) of the liquid protein concentrate. Still further preferably, the liquid protein concentrate has a fat content of less than 0.2% (w/v) of the liquid protein concentrate. Still further preferably, the liquid protein concentrate has a fat content of 0.1 % (w/v) of the liquid protein concentrate.

Optionally, the method comprises:
(a) providing a liquid dairy protein concentrate having a fat content of 0.1% (w/v) of the liquid protein concentrate;
(b) adding fat to the liquid protein concentrate; and
(c) adding a dairy ingredient to the liquid protein concentrate.

Optionally, the liquid protein concentrate has a lactose content of less than 2% (w/v) of the liquid protein concentrate. Further optionally, the liquid protein concentrate has a lactose content of less than 1.5% (w/v), optionally less than 1.0% (w/v), optionally less than 0.5% (w/v), optionally less than 0.3% (w/v), optionally less than 0.2% (w/v) of the liquid protein concentrate.

Optionally, the method comprises:
(a) providing a liquid dairy protein concentrate having a lactose content of less than 2% (w/v) of the liquid protein concentrate;
(b) adding fat to the liquid protein concentrate; and
(c) adding a dairy ingredient to the liquid protein concentrate.

Optionally, the liquid protein concentrate has a protein content greater than 5% (w/v) of the liquid protein concentrate. Further optionally, the liquid protein concentrate has a protein content greater than 10% (w/v), optionally greater than 15% (w/v), further optionally greater than 20% (w/v), further optionally greater than 25% (w/v), further optionally greater than 30% (w/v) of the liquid protein concentrate.

Preferably, the liquid protein concentrate has a protein content greater than 20% (w/v) of the liquid protein concentrate.

Optionally, the method comprises:
(a) providing a liquid dairy protein concentrate having a protein content greater than 20% (w/v) of the liquid protein concentrate;
(b) adding fat to the liquid protein concentrate; and
(c) adding a dairy ingredient to the liquid protein concentrate.

Optionally, the method comprises:
(a) providing a liquid dairy protein concentrate having a fat content of 0.1% (w/v) and a protein content greater than 20% (w/v) of the liquid protein concentrate;
(b) adding fat to the liquid protein concentrate; and
(c) adding a dairy ingredient to the liquid protein concentrate.

Optionally, the fat is a vegetable fat.

Optionally, the fat is an oil. Further optionally, the fat is a vegetable oil.

Preferably, the fat is a vegetable oil.

Optionally, the fat is selected from palm oil, soybean oil, rapeseed or canola oil, sunflower oil, peanut oil, cottonseed oil, coconut oil, olive oil, and combinations each thereof.

Preferably, the fat is rapeseed or canola oil.

Optionally, the method comprises:
(a) providing a liquid protein concentrate;
(b) adding rapeseed or canola oil to the liquid protein concentrate; and
(c) adding a dairy ingredient to the liquid protein concentrate.

Optionally, the adding fat step comprises adding fat in an amount of 1-9% (w/v) of the liquid protein concentrate. Further optionally, the adding fat step comprises adding fat in an amount of 1-9%, optionally 1-6%, optionally 2-6%, optionally 3-6%, optionally 3-5%, further optionally 3-4% (w/v) of the liquid protein concentrate.

Preferably, the adding fat step comprises adding fat in an amount of 3-4% (w/v) of the liquid protein concentrate.

Optionally, the method comprises:
(a) providing a liquid protein concentrate;
(b) adding rapeseed or canola oil in an amount of 3-4% (w/v) of the liquid protein concentrate to the liquid protein concentrate; and
(c) adding a dairy ingredient to the liquid protein concentrate.

Optionally, the dairy ingredient is cream.

Optionally, the dairy ingredient is cream having a fat content of greater than 35% (w/v) of the cream. Further optionally, the dairy ingredient is cream having a fat content of 35-65%, optionally 40-60%, further optionally 45-55%, further optionally 48-53%, further optionally 50% (w/v) of the cream.

Preferably, the dairy ingredient is cream having a fat content of 48-53% (w/v) of the cream.

Optionally, the method comprises:
(a) providing a liquid protein concentrate;
(b) adding fat to the liquid protein concentrate; and
(c) adding cream to the liquid protein concentrate.

Optionally, the method comprises:
(a) providing a liquid protein concentrate;
(b) adding fat to the liquid protein concentrate; and
(c) adding cream having a fat content of 48-53% (w/v) of the cream to the liquid protein concentrate.

Optionally, the dairy ingredient is cream having a protein content greater than 1% (w/v) of the cream. Further optionally, the dairy ingredient is cream having a protein content greater than 1.5% (w/v), optionally greater than 2.0% (w/v), further optionally greater than 2.5% (w/v), further optionally greater than 3.0% (w/v) of the cream.

Preferably, the dairy ingredient is cream having a protein content greater than 1.0% (w/v) of the cream.

Optionally, the method comprises:
(a) providing a liquid protein concentrate;
(b) adding fat to the liquid protein concentrate; and
(c) adding cream having a protein content greater than 1.0% (w/v) of the cream.

Optionally, the method comprises:
(a) providing a liquid protein concentrate;
(b) adding fat to the liquid protein concentrate; and
(c) adding cream having a fat content of 48-53% (w/v) and a protein content greater than 1.0% (w/v) of the cream.

Optionally, the adding a dairy ingredient step comprises adding a dairy ingredient in an amount of 1-9% (w/v) of the liquid protein concentrate. Further optionally, the adding a dairy ingredient step comprises adding a dairy ingredient in an amount of 1-9%, optionally 1-6%, optionally 2-6%, optionally 3-6%, further optionally 4-6%, further optionally 4-5% (w/v) of the liquid protein concentrate.

Preferably, the adding a dairy ingredient step comprises adding a dairy ingredient in an amount of 4-5% (w/v) of the liquid protein concentrate.

Optionally, the method comprises:
(a) providing a liquid protein concentrate;
(b) adding fat to the liquid protein concentrate; and
(c) adding cream in an amount of 4-5% (w/v) of the liquid protein concentrate.

Optionally, the method comprises:
(a) providing a liquid protein concentrate;
(b) adding fat to the liquid protein concentrate; and
(c) adding cream having a fat content of 48-53% (w/v) and a protein content greater than 1.0% (w/v) of the cream in an amount of 4-5% (w/v) of the liquid protein concentrate.

Preferably, the method comprises:
(a) providing a liquid dairy protein concentrate having a fat content of 0.1% (w/v) and a protein content greater than 20% (w/v) of the liquid protein concentrate;
(b) adding rapeseed or canola oil in an amount of 3-4% (w/v) of the liquid protein concentrate to the liquid protein concentrate; and
(c) adding cream having a fat content of 48-53% (w/v) and a protein content greater than 1.0% (w/v) of the cream in an amount of 4-5% (w/v) of the liquid protein concentrate.

Optionally, the providing a liquid protein concentrate step comprises providing skim milk and fractionating the skim milk. Further optionally, the providing a liquid protein concentrate step comprises providing skim milk having a fat content of 0.1-2% (w/v) of the liquid protein concentrate and fractionating the skim milk. Optionally or additionally, the providing a liquid protein concentrate step comprises providing skim milk having a protein content less than 20% (w/v) of the liquid protein concentrate and fractionating the skim milk.

Preferably, the providing a liquid protein concentrate step comprises providing skim milk having a fat content of less than 1% (w/v) of the skim milk and fractionating the skim milk. Further preferably, the providing a liquid protein concentrate step comprises providing skim milk having a fat content of less than 0.5% (w/v) of the skim milk and fractionating the skim milk. Still further preferably, the providing a liquid protein concentrate step comprises providing skim milk having a fat content of less than 0.3% (w/v) of the skim milk and fractionating the skim milk. Still further preferably, the providing a liquid protein concentrate step comprises providing skim milk having a fat content of less than 0.2% (w/v) of the skim milk and fractionating the skim milk. Still further preferably, the providing a liquid protein concentrate step comprises providing skim milk having a fat content of 0.1 % (w/v) of the skim milk and fractionating the skim milk.

Optionally, the method comprises:
(a) providing skim milk and fractionating the skim milk to provide a liquid protein concentrate;
(b) adding fat to the liquid protein concentrate; and
(c) adding a dairy ingredient to the liquid protein concentrate.

Optionally, the method comprises:
(a) providing skim milk having a fat content of 0.1% (w/v) of the liquid protein concentrate and fractionating the skim milk to provide a liquid protein concentrate;
(b) adding fat to the liquid protein concentrate; and
(c) adding a dairy ingredient to the liquid protein concentrate.

Optionally, the fractionating step comprises subjecting the skim milk to filtration. Further optionally, the fractionating step comprises subjecting the skim milk to filtration to form a first permeate and a first retentate. Still further optionally, the fractionating step comprises subjecting the skim milk to filtration to form a first permeate and a first retentate and retaining the first retentate.

Preferably, the fractionating step comprises subjecting the skim milk to ultrafiltration. Further preferably, the fractionating step comprises subjecting the skim milk to ultrafiltration to form a first permeate and a first retentate. Still further preferably, the fractionating step comprises subjecting the skim milk to ultrafiltration to form a first permeate and a first retentate and retaining the first retentate.

Optionally, the method comprises:
(a) providing skim milk and subjecting the skim milk to ultrafiltration to provide a liquid protein concentrate;
(b) adding fat to the liquid protein concentrate; and
(c) adding a dairy ingredient to the liquid protein concentrate.

Optionally, the method comprises:
(a) providing skim milk having a fat content of 0.1% (w/v) of the skim milk and subjecting the skim milk to ultrafiltration to provide a liquid protein concentrate;
(b) adding fat to the liquid protein concentrate; and
(c) adding a dairy ingredient to the liquid protein concentrate.

Optionally or additionally, the fractionating step comprises subjecting the skim milk to difiltration. Further optionally, the fractionating step comprises subjecting the skim milk to diafiltration to form a first permeate and a first retentate. Still further optionally, the fractionating step comprises subjecting the skim milk to diafiltration to form a first permeate and a first retentate and retaining the first retentate.

Optionally, the fractionating step is conducted at a temperature of less than 20°C. Further optionally, the fractionating step is conducted at a temperature of less than 15°C, optionally less than 10°C, optionally less than 5°C, optionally less than 3°C.

Optionally, the first retentate has a lactose content of less than 2% (w/v) of the first retentate. Further optionally, the first retentate has a lactose content of less than 1.5% (w/v), optionally less than 1.0% (w/v), optionally less than 0.5% (w/v), optionally less than 0.3% (w/v), optionally less than 0.2% (w/v) of the first retentate.

Optionally or additionally, the providing a liquid protein concentrate step comprises providing skim milk and subjecting the skim milk to reverse osmosis.

Optionally or additionally, the providing a liquid protein concentrate step comprises providing the first retentate and subjecting the first retentate to reverse osmosis.

Optionally, the providing skim milk step comprises providing whole milk and separating the whole milk. Further optionally, the providing skim milk step comprises providing whole milk having a fat content of 3-6% (w/v) of the whole milk and separating the whole milk. Optionally or additionally, the providing skim milk step comprises providing whole milk having a protein content greater than 30% (w/v) of the whole milk and separating the whole milk.

Optionally, the method comprises:
(a) providing whole milk and separating the whole milk to provide skim milk and fractionating the skim milk to provide a liquid protein concentrate;
(b) adding fat to the liquid protein concentrate; and
(c) adding a dairy ingredient to the liquid protein concentrate.

Optionally, the method comprises:
(a) providing whole milk having a fat content of 3-6% (w/v) of the whole milk and separating the whole milk to provide skim milk and fractionating the skim milk to provide a liquid protein concentrate;
(b) adding fat to the liquid protein concentrate; and
(c) adding a dairy ingredient to the liquid protein concentrate.

Preferably, the method comprises:
(a) providing whole milk having a fat content of 3-6% (w/v) of the whole milk and separating the whole milk to provide having a fat content of 0.1% (w/v) of the skim milk and subjecting the skim milk to ultrafiltration to provide a liquid protein concentrate;
(b) adding fat to the liquid protein concentrate; and
(c) adding a dairy ingredient to the liquid protein concentrate.

Optionally, the separating step comprises subjecting the whole milk to centrifugation to form a skim milk and cream. Further optionally, the separating step comprises subjecting the whole milk to centrifugation to form a skim milk and cream and retaining the skim milk.

Optionally, the separating step is conducted at a temperature of greater than 10°C. Further optionally, the separating step is conducted at a temperature of greater than 20°C, optionally greater than 30°C, optionally greater than 40°C, optionally greater than 50°C, optionally greater than 60°C.

Optionally, the skim milk has a total solids content of 5-15% (w/v) of the skim milk. Further optionally, the skim milk has a total solids content of 6-14% (w/v), optionally 7-13% (w/v), optionally 8-12% (w/v), optionally 9-11% (w/v) of the skim milk.

Optionally, the method comprises the further step of pasteurising the skim milk.

Optionally, the pasteurising step is conducted at a temperature of greater than 50°C. Further optionally, the pasteurising step is conducted at a temperature of greater than 55°C, optionally greater than 60°C, optionally greater than 65°C, optionally greater than 70°C, optionally greater than 75°C.

Optionally, the pasteurising step is conducted for a period of at least 5 seconds. Further optionally, the pasteurising step is conducted for a period of at least 10 seconds, optionally at least 15 seconds, optionally at least 20 seconds, optionally at least 25 seconds, optionally at least 30 seconds.

Optionally, the method comprises the further step of cooling the pasteurised skim milk.

Optionally, the cooling step is conducted to a temperature of less than 20°C. Further optionally, the cooling step is conducted at a temperature of less than 15°C, optionally less than 10°C, optionally less than 5°C, optionally less than 3°C.

Optionally or additionally, the method further comprises the step of adding additional ingredients to the liquid milk protein concentrate.

Optionally, the method comprising:
(a) providing a liquid protein concentrate;
(b) adding fat to the liquid protein concentrate;
(c) adding a dairy ingredient to the liquid protein concentrate; and
(d) adding additional ingredients to the liquid milk protein concentrate.

Optionally, the additional ingredients are independently selected from carbohydrates, protein, emulsifiers, vitamins, and minerals.

Optionally, the carbohydrate is a monosaccharide. Further optionally, the carbohydrate is a monosaccharide selected from glucose, fructose, and galactose.

Optionally, the carbohydrate is a disaccharide. Further optionally, the carbohydrate is a disaccharide selected from sucrose, lactose, and maltose.

Optionally, the carbohydrate is a polysaccharide. Further optionally, the carbohydrate is a dextrin. Still further optionally, the carbohydrate is a maltodextrin.

Optionally, the carbohydrate is added in an amount of 1-40% (w/v) of the liquid protein concentrate. Further optionally, the carbohydrate is added in an amount of 5-40% (w/v), optionally 10-40% (w/v), optionally 10-35% (w/v), optionally 10-30% (w/v) of the liquid protein concentrate.

Optionally, the emulsifier is lecithin. Further optionally, the emulsifier is lecithin from egg yolk, soybeans, milk, rapeseed, cottonseed, or sunflower oil. Preferably, the emulsifier is lecithin from soybeans or soy lecithin.

Optionally, the emulsifier is mono- and/or di-glycerides of fatty acids. Further optionally, the emulsifier is mono- and di-glycerides of fatty acids.

Optionally, the additional ingredient is a salt of citric acid. Further optionally, the additional ingredient is a citrate.

Optionally, the additional ingredient is a sodium salt of citric acid. Further optionally, the additional ingredient is sodium citrate.

Optionally, the additional ingredient is a calcium salt of citric acid. Further optionally, the additional ingredient is calcium citrate.

Optionally, the method excludes the step of adding salts of phosphoric acid to the liquid milk protein concentrate. Optionally, the method excludes the step of adding phosphates to the liquid milk protein concentrate.

Optionally, the method excludes the step of adding sodium salts of phosphoric acid to the liquid milk protein concentrate. Optionally, the method excludes the step of adding sodium phosphates to the liquid milk protein concentrate. Optionally, the method excludes the step of adding monosodium phosphate to the liquid milk protein concentrate. Optionally, the method excludes the step of adding disodium phosphate to the liquid milk protein concentrate.

Optionally, the method excludes the step of adding salts of sulphuric acid to the liquid milk protein concentrate. Optionally, the method excludes the step of adding sulphates to the liquid milk protein concentrate.

Optionally, the method excludes the step of adding sodium salts of sulphuric acid to the liquid milk protein concentrate. Optionally, the method excludes the step of adding sodium sulphates to the liquid milk protein concentrate.

Optionally or additionally, the method further comprises the step of heating the liquid milk protein concentrate.

Optionally, the method comprising:
(a) providing a liquid protein concentrate;
(b) adding fat to the liquid protein concentrate;
(c) adding a dairy ingredient to the liquid protein concentrate; and
(d) heating the liquid milk protein concentrate.

Optionally, the method comprising:
(a) providing a liquid protein concentrate;
(b) adding fat to the liquid protein concentrate;
(c) adding a dairy ingredient to the liquid protein concentrate;
(d) adding additional ingredients to the liquid milk protein concentrate; and
(e) heating the liquid milk protein concentrate.

Optionally, the heating step is conducted at a temperature of greater than 100°C. Further optionally, the heating step is conducted at a temperature of greater than 110°C, optionally greater than 120°C, optionally greater than 130°C, optionally greater than 140°C, optionally greater than 150°C.

Preferably, the heating step is conducted at a temperature of greater than 140°C.

Optionally, the method comprising:
(a) providing a liquid protein concentrate;
(b) adding fat to the liquid protein concentrate;
(c) adding a dairy ingredient to the liquid protein concentrate; and
(d) heating the liquid milk protein concentrate at a temperature of greater than 140°C.

Optionally, the heating step is conducted for a period of at least 1 second. Further optionally, the heating step is conducted for a period of at least 2 seconds, optionally at least 3 seconds, optionally at least 4 seconds, optionally at least 5 seconds, optionally at least 15 seconds, optionally at least 30 seconds, optionally at least 60 seconds, optionally at least 90 seconds.

Preferably, the heating step is conducted for a period of at least 30 seconds.

Optionally, the method comprising:
(a) providing a liquid protein concentrate;
(b) adding fat to the liquid protein concentrate;
(c) adding a dairy ingredient to the liquid protein concentrate; and
(d) heating the liquid milk protein concentrate at a temperature of greater than 140°C for a period of at least 30 seconds.

Optionally or additionally, the heating step comprises pre-heating the liquid milk protein concentrate prior to the heating step.

Optionally, the method comprising:
(a) providing a liquid protein concentrate;
(b) adding fat to the liquid protein concentrate;
(c) adding a dairy ingredient to the liquid protein concentrate;
(d) adding additional ingredients to the liquid milk protein concentrate;
(e) pre-heating the liquid milk protein concentrate; and
(f) heating the liquid milk protein concentrate.

Optionally, the pre-heating step is conducted at a temperature of greater than 50°C. Further optionally, the heating step is conducted at a temperature of greater than 60°C, optionally greater than 70°C, optionally greater than 80°C, optionally greater than 90°C.

Preferably, the pre-heating step is conducted at a temperature of greater than 80°C.

Optionally, the method comprising:
(a) providing a liquid protein concentrate;
(b) adding fat to the liquid protein concentrate;
(c) adding a dairy ingredient to the liquid protein concentrate;
(d) adding additional ingredients to the liquid milk protein concentrate;
(e) pre-heating the liquid milk protein concentrate at a temperature of greater than 80°C; and
(f) heating the liquid milk protein concentrate.

Optionally, the pre-heating step is conducted for a period of at least 1 minute. Further optionally, the pre-heating step is conducted for a period of at least 2 minute, optionally at least 3 minute, optionally at least 4 minute, optionally at least 5 minute, optionally at least 15 minute, optionally at least 30 minute, optionally at least 60 minutes.

Preferably, the pre-heating step is conducted for a period of at least 2 minutes.

Optionally, the method comprising:
(a) providing a liquid protein concentrate;
(b) adding fat to the liquid protein concentrate;
(c) adding a dairy ingredient to the liquid protein concentrate;
(d) adding additional ingredients to the liquid milk protein concentrate;
(e) pre-heating the liquid milk protein concentrate at a temperature of greater than 80°C for a period of at least 2 minutes; and
(f) heating the liquid milk protein concentrate.

Optionally, the heating step or the pre-heating step comprises direct heating. Alternatively, the heating step or the pre-heating step comprises indirect heating

Optionally, the heating step or the pre-heating step comprises steam injection. Further optionally, the heating step or the pre-heating step comprises direct steam injection.

Optionally, the heating step or the pre-heating step comprises steam infusion. Further optionally, the heating step or the pre-heating step comprises direct steam infusion.

Optionally or additionally, the method further comprises the step of admixing the liquid milk protein concentrate.

Optionally or additionally, the method further comprises the step of homogenising the liquid milk protein concentrate. Further optionally or additionally, the method further comprises the step of homogenising the liquid milk protein concentrate at a pressure of 1000-3000 psi, optionally 1250-2750 psi, optionally 1500-2500 psi, optionally, 1500-2250 psi, optionally 1500-2000 psi, optionally 1750-2000 psi.

Optionally or additionally, the method further comprises the step of cooling the liquid milk protein concentrate.

Optionally or additionally, the cooling step comprises cooling the liquid milk protein concentrate under pressure. Further optionally or additionally, the cooling step comprises cooling the liquid milk protein concentrate under vacuum.

Optionally, the cooling step is conducted to a temperature of less than 90°C. Further optionally, the cooling step is conducted at a temperature of less than 80°C, optionally less than 70°C, optionally less than 60°C, optionally less than 50°C.

Optionally or additionally, the method further comprises the step of packaging the ready-to-consume food product.

Further optionally or additionally, the method further comprises the step of aseptically packaging the ready-to-consume food product.

Optionally, the packaging step comprises packaging the ready-to-consume food product into rigid containers, paperboard containers, semi-rigid plastic containers, flexible plastic containers, or combinations each thereof.

Optionally, the containers are selected from metal cans, totes, bottles, jars, webfed and rollfed paper/foil/plastic cartons and preformed cartons, webfed thermoformed cups, tubs, and trays, preformed cups, tubs, trays, pouches, and sachets.

According to a second aspect of the present invention, there is provided a ready-to-consume food product.

Optionally, the ready-to-consume food product has an energy content of at least 100 kcal per 100ml of the ready-to-consume food product. Further optionally, the ready-to-consume food product has an energy content of at least 150 kcal, optionally at least 200 kcal, optionally at least 250 kcal per 100ml of the ready-to-consume food product.

Optionally, the ready-to-consume food product has an energy content of 100-250 kcal per 100ml of the ready-to-consume food product. Further optionally, the ready-to-consume food product has an energy content of 150-200 kcal.

Optionally, the ready-to-consume food product has a fat content of 15-35% (w/v) of the ready-to-consume food product. Further optionally, the ready-to-consume food product has a fat content of 20-30% (w/v), optionally 21-29% (w/v), optionally 22-28% (w/v), optionally 23-27% (w/v), optionally 24-26% (w/v) of the ready-to-consume food product.

Optionally, the ready-to-consume food product has a protein content of 20-40% (w/v) of the ready-to-consume food product. Further optionally, the ready-to-consume food product has a protein content of 25-35% (w/v), optionally 25-30% (w/v), optionally 26-29% (w/v), optionally 27-28% (w/v) of the ready-to-consume food product.

Optionally, the ready-to-consume food product has a protein:fat ratio of at least 0.5:1.0. Further optionally, the ready-to-consume food product has a protein:fat ratio of at least 0.8:1.0, optionally at least 1.0:1.0, optionally at least 1.2:1.0, optionally at least 1.4:1.0, optionally at least 1.6:1.0, optionally at least 1.8:1.0, optionally at least 2.0:1.0.

Optionally, the ready-to-consume food product has a protein:dairy ingredient ratio of at least 1.0:1.0. Further optionally, the ready-to-consume food product has a protein:dairy ingredient ratio of at least 2.0:1.0, optionally at least 3.0:1.0, optionally at least 4.0:1.0, optionally at least 5.0:1.0, optionally at least 6.0:1.0.

Optionally, the ready-to-consume food product has a carbohydrate content of 20-50% (w/v) of the ready-to-consume food product. Further optionally, the ready-to-consume food product has a carbohydrate content of 25-45% (w/v), optionally 35-45% (w/v), optionally 36-44% (w/v), optionally 37-43% (w/v), optionally 38-42% (w/v), optionally 39-41% (w/v) of the ready-to-consume food product.

Optionally, the ready-to-consume food product has a lactose content of less than 2% (w/v) of the ready-to-consume food product. Further optionally, the ready-to-consume food product has a lactose content of less than 1.5% (w/v), optionally less than 1.0% (w/v), optionally less than 0.5% (w/v), optionally less than 0.3% (w/v), optionally less than 0.2% (w/v) of the ready-to-consume food product.

Optionally, the ready-to-consume food product has a total solids content of 20-40% (w/v) of the ready-to-consume food product. Further optionally, the ready-to-consume food product has a total solids content of 25-35% (w/v), optionally 26-34% (w/v), optionally 27-33% (w/v), optionally 28-32% (w/v), optionally 29-31% (w/v) of the ready-to-consume food product.

Optionally, the ready-to-consume food product is a ready-to-consume beverage product.

Optionally, the ready-to-consume food product is obtainable by a method according to the first aspect of the present invention. Optionally, the ready-to-consume food product is obtained by a method according to the first aspect of the present invention.

Optionally, the ready-to-consume food product is a food supplement.

According to a third aspect of the present invention there is provided a food item comprising a ready-to-consume food product obtained by a method according to the first aspect of the present invention, or the ready-to-consume food product according to the second aspect of the present invention.

### Brief Description of the Drawings

Embodiments of the present invention will be described with reference to the appended non-limiting examples, and the accompanying drawings, in which:

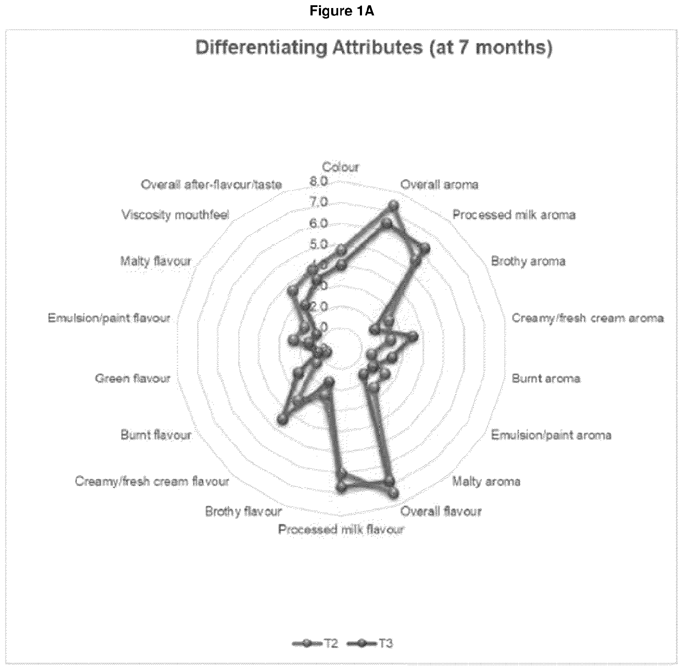

Figure 1A is a graphical illustration of the attributes differentiating between the samples;

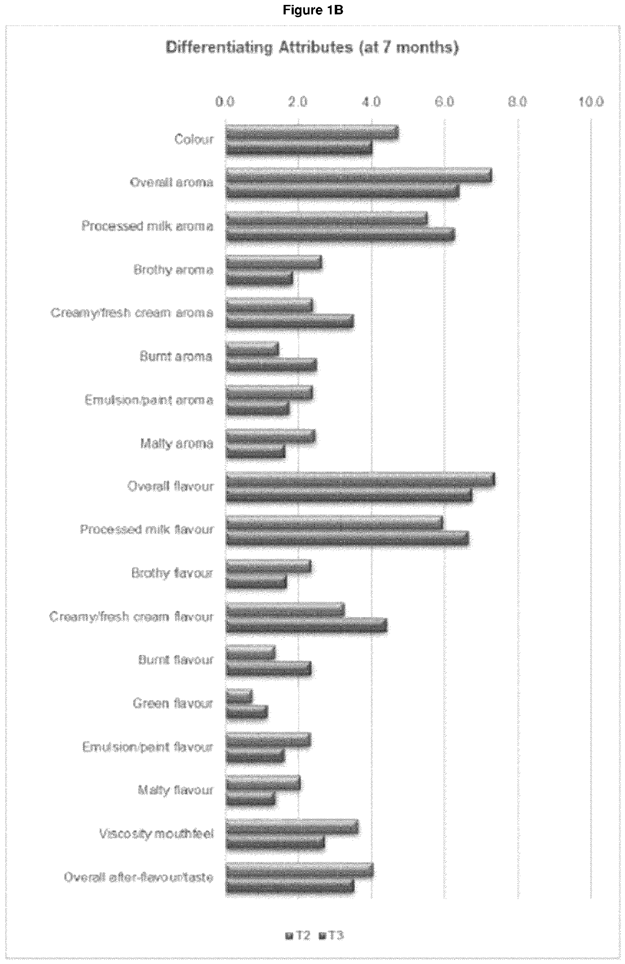

Figure 1B is a graphical illustration of the attributes differentiating between the samples;

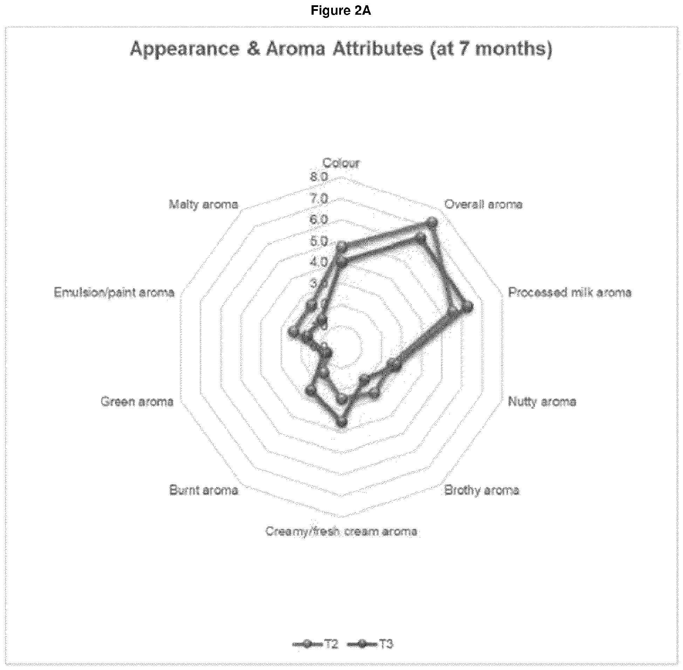

Figure 2A is a graphical illustration of the appearance and aroma attributes;

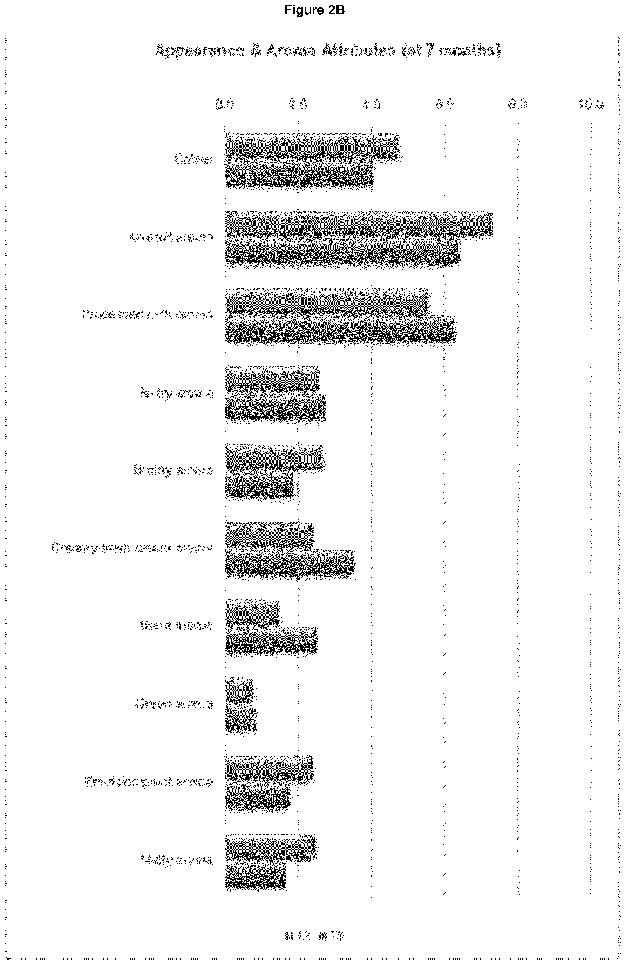

Figure 2B is a graphical illustration of the appearance and aroma attributes;

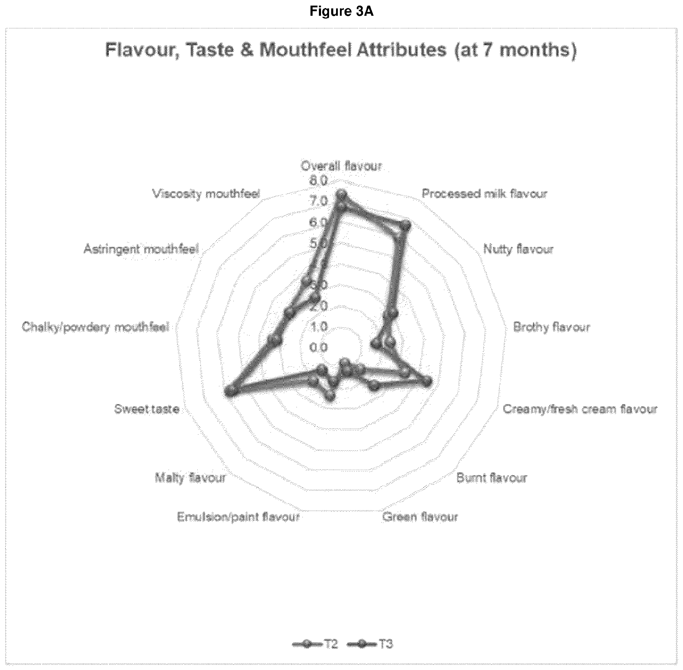

Figure 3A is a graphical illustration of the flavour, taste and mouthfeel attributes;

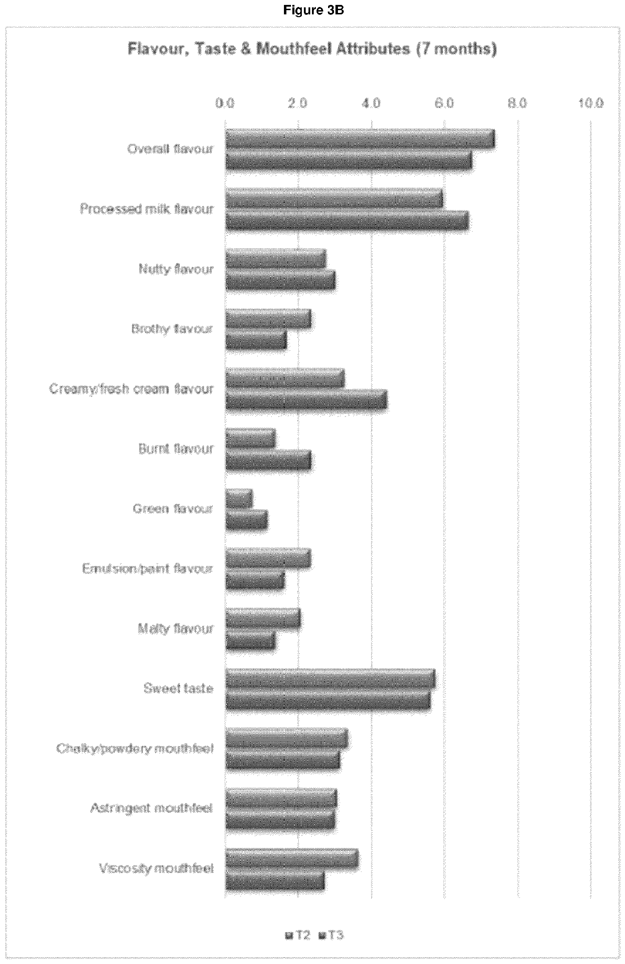

Figure 3B is a graphical illustration of the flavour, taste and mouthfeel attributes;

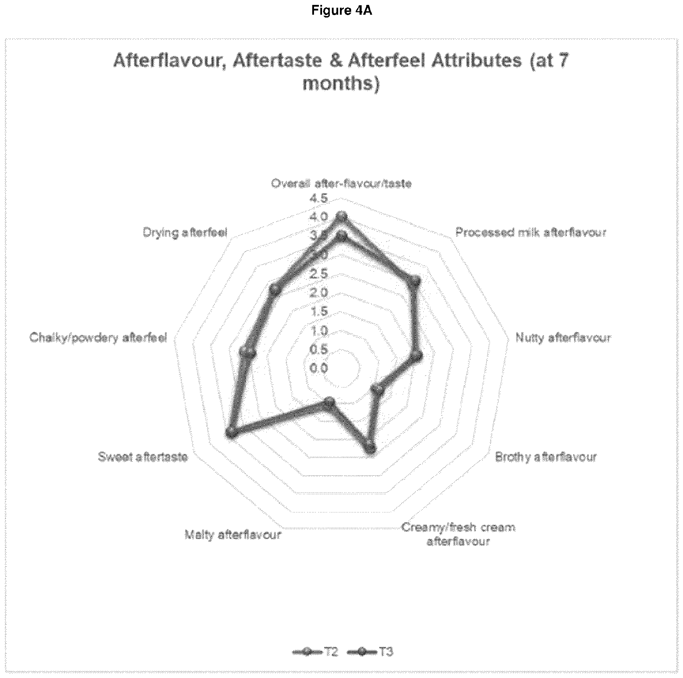

Figure 4A is a graphical illustration of the afterflavour/taste/feel attributes;

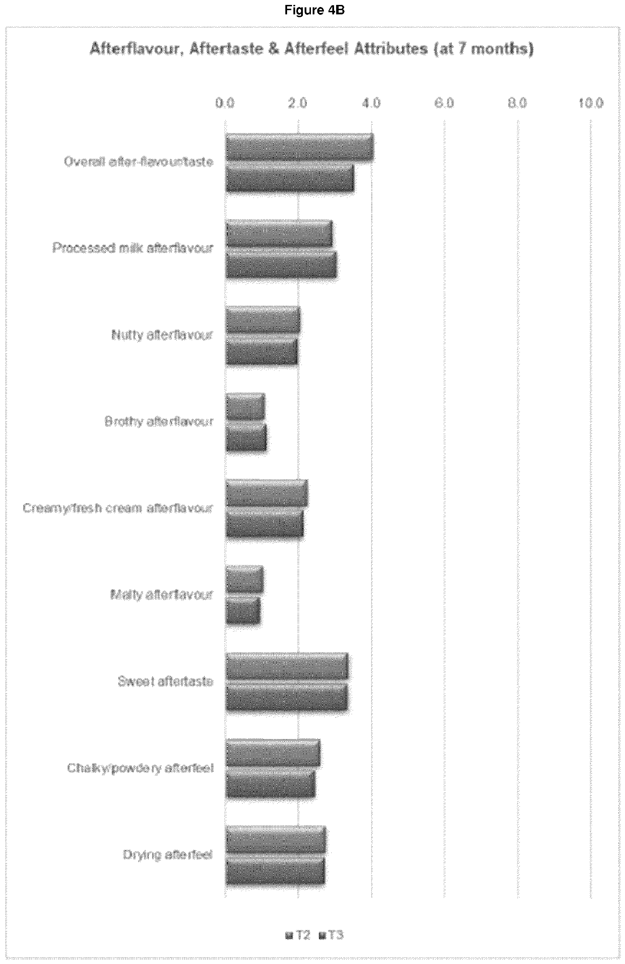

Figure 4B is a graphical illustration of the afterflavour/taste/feel attributes;

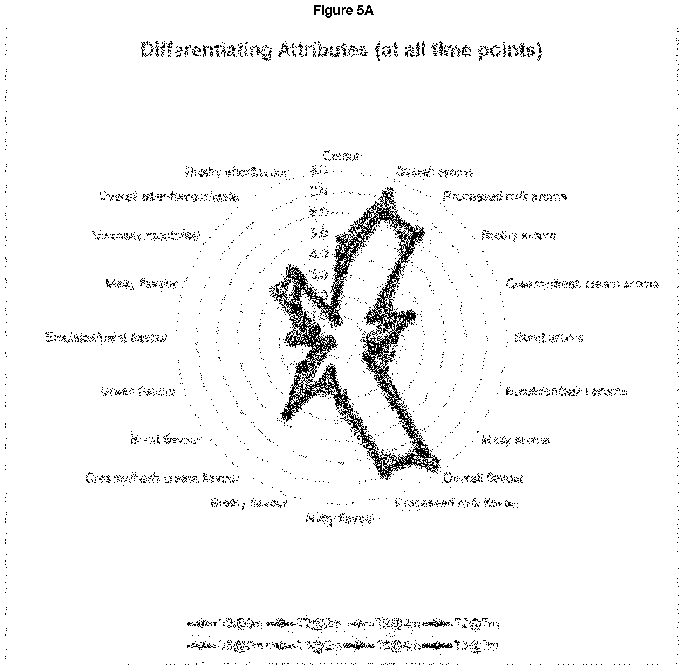

Figure 5A is a graphical illustration of the attributes differentiating between the samples;

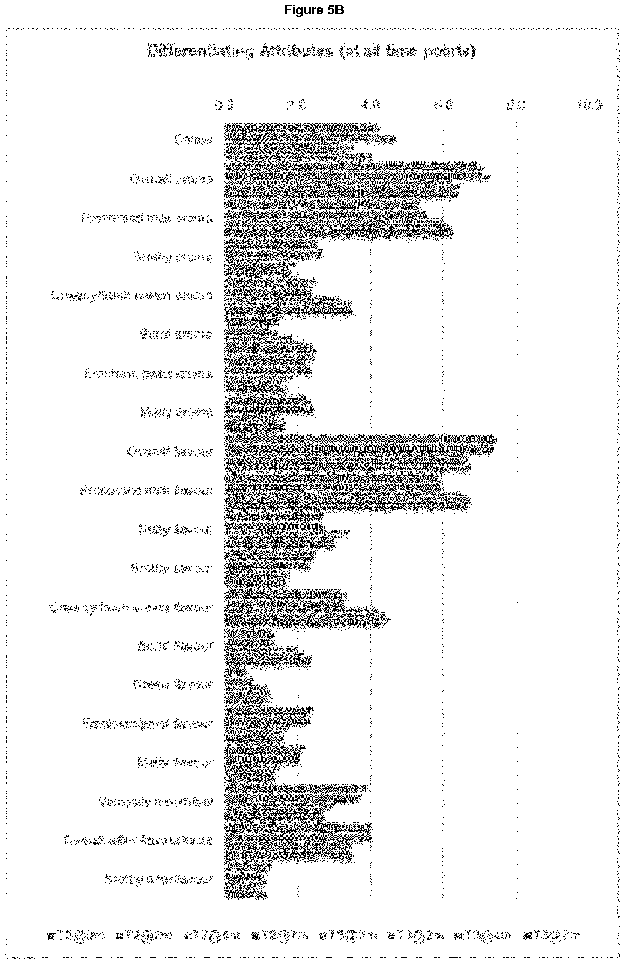

Figure 5B is a graphical illustration of the attributes differentiating between the samples;

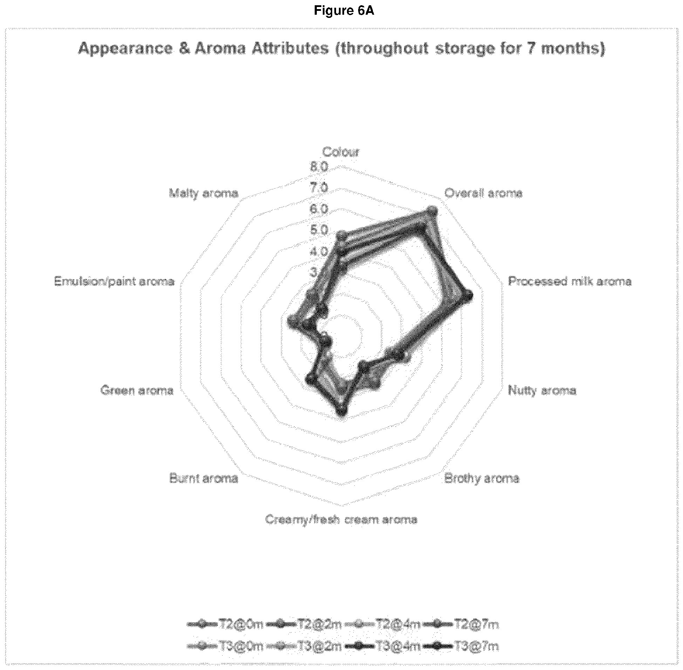

Figure 6A is a graphical illustration of the appearance and aroma attributes;

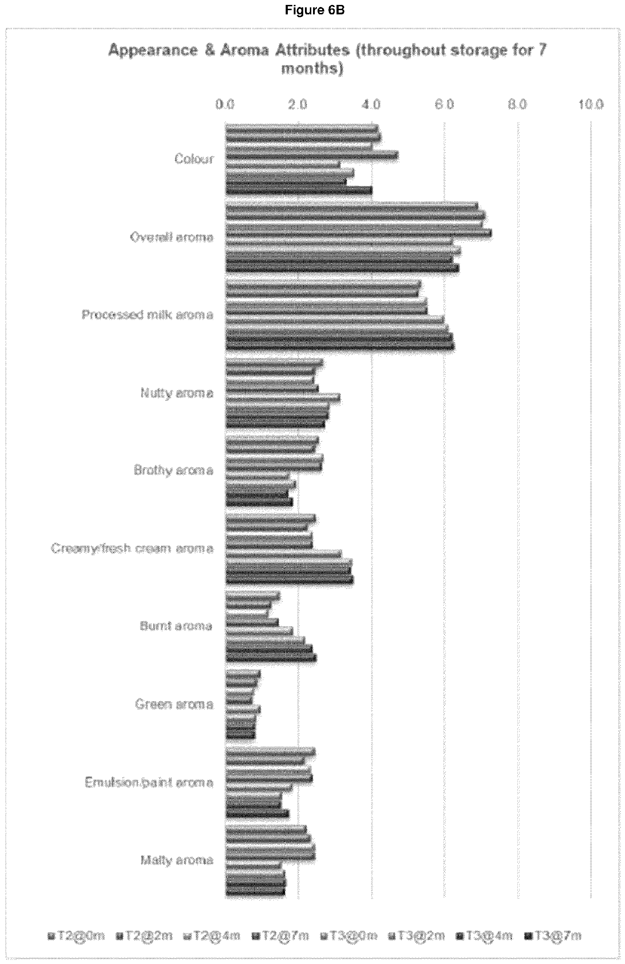

Figure 6B is a graphical illustration of the appearance and aroma attributes;

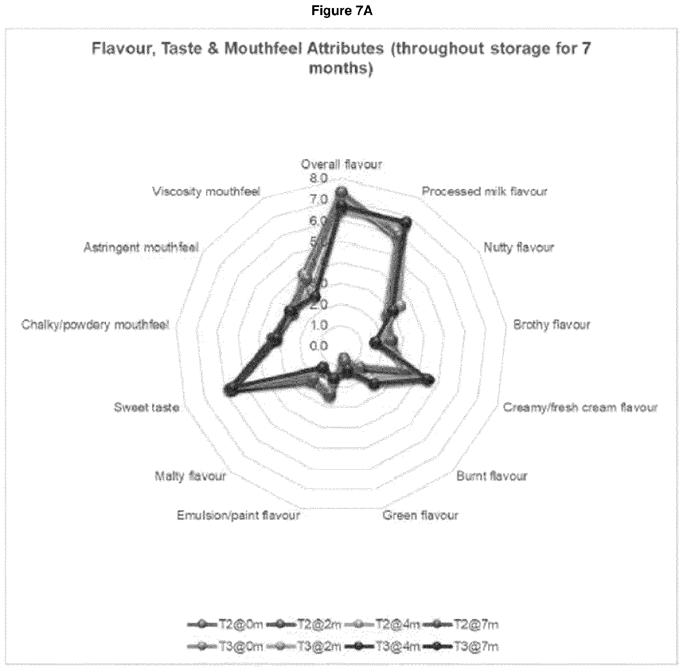

Figure 7A is a graphical illustration of the flavour, taste and mouthfeel attributes;

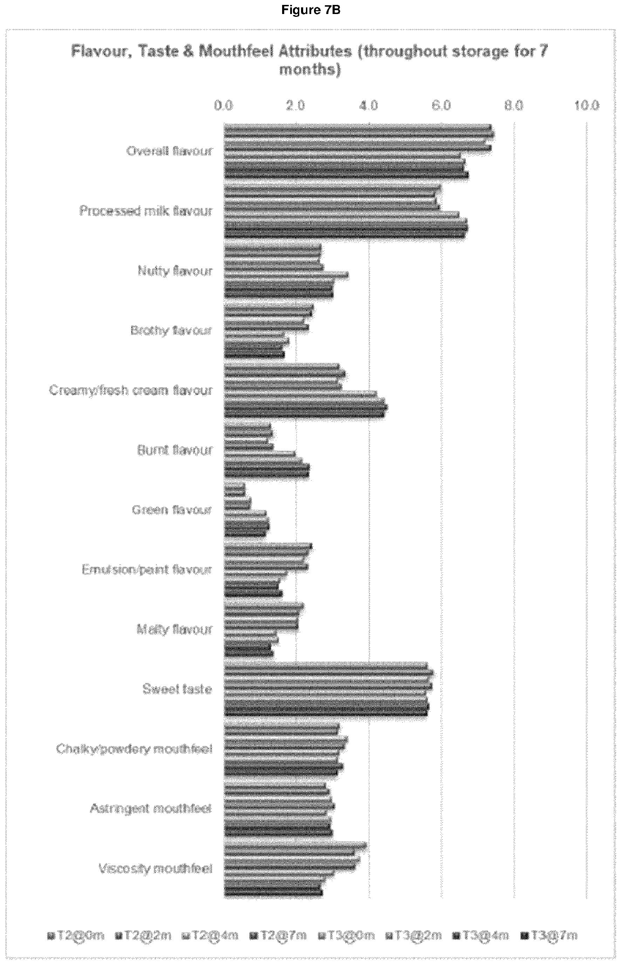

Figure 7B is a graphical illustration of the flavour, taste and mouthfeel attributes;

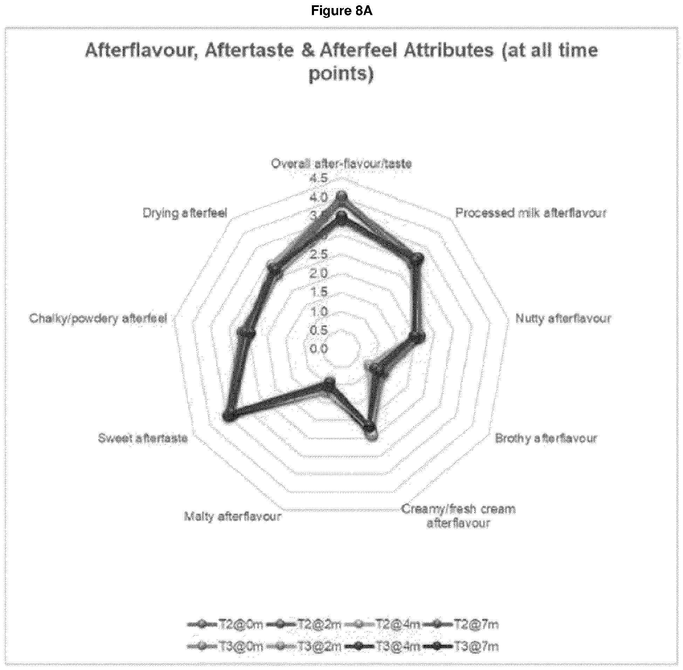

Figure 8A is a graphical illustration of the afterflavour/taste/feel attributes;

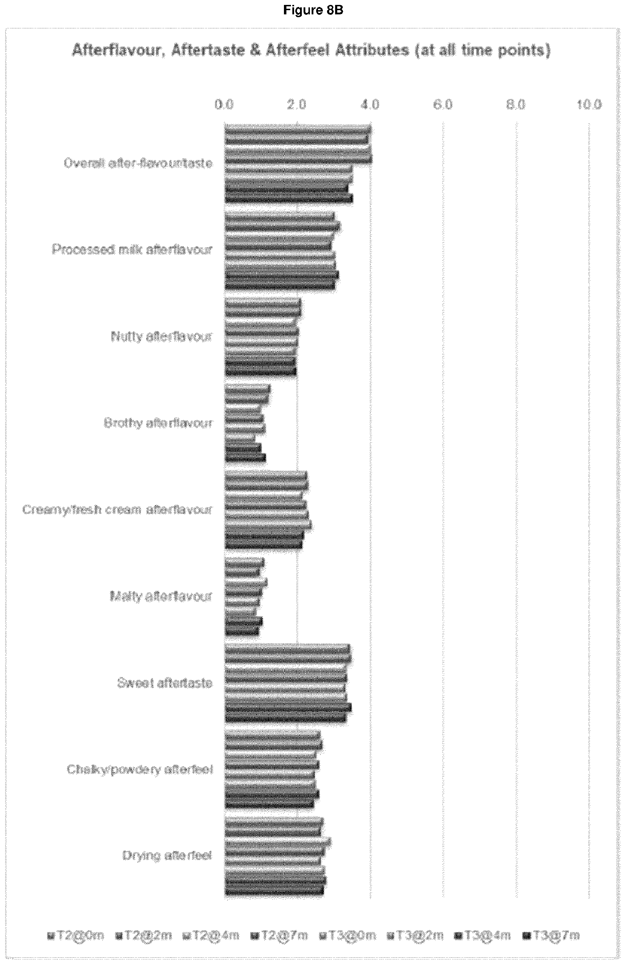

Figure 8B is a graphical illustration of the afterflavour/taste/feel attributes; and
Figure 9 is a bi plot of the scores and loadings for PC1 vs PC 2.

### Examples

### Example 1

Preparing a ready-to-consume food product
6.22 kg of maltodextrin (Cargill, Incorporated) and 5 kg of sugar were reconstituted into 14 litres of purified (reverse osmosis, RO) water using a high shear mixer (Silverson Machines), and allowed to mix for 5 minutes to form a carbohydrate solution.
308 g of a vitamin premix and 38 g of a mineral premix (Glanbia Ireland) were added into the carbohydrate solution to form a first blend.
400 g of potassium citrate (70% solution), 80 g of sodium citrate, and 46 g of citric acid (mixed in 100ml of RO water before addition) and 12 g of MgO were mixed in 2 litres of RO water using a high shear mixer for a minimum of 30 minutes, until the colour changed from cloudy to clear to form a second blend.
20 g of sodium chloride was hydrated separately in 0.5 litres of RO water using an agitator/mixer (Type M Laboratory Mixer, MTI Mischtechnik International GmbH) to form a third blend.
42 kg of milk protein isolate liquid retentate (Solmiko^{®}, Glanbia Ireland) was heated to 50°C slowly, using mild agitation.

The second blend, followed by the third blend, was added to the heated milk protein isolate liquid retentate, and allowed to mix for 5 minutes.

The first blend was added slowly to the heated milk protein isolate liquid retentate, and the temperature of the resultant solution was maintained at 50°C, allowed to mix for 5 minutes, and the pH adjusted to -6.7 using citric acid or KOH, if necessary.

2.35 kg of rapeseed oil (Cargill, Incorporated) was heated to 70°C and agitated well.

Lecithin (DuPont de Nemours, Inc) and mono- and di-glycerides of fatty acids (Cremodan^{®} Super, DuPont de Nemours, Inc) were added to the heated oil solution, using a high shear mixer (10,000rpm), mixed well, and the temperature of the resultant solution was maintained at 70°C.

This 70°C oil solution was slowly added to the heated milk protein isolate liquid retentate solution and agitated well.

3.42 kg of cream (Glanbia Ireland) was added to the heated milk protein isolate liquid retentate solution, and the temperature of the resultant solution was maintained at 55°C, allowed to mix for 5 minutes, and the pH adjusted to -6.65 - 6.75 using citric acid or KOH, if necessary.

The resultant solution was sterilised at an F0 of 5 or greater (Multipurpose Ultra High Temperature (UHT) Pilot Plants (SPP), SPX FLOW, Inc.) followed by aseptic homogenisation and down stream filling.

### Example 2

### Microbiological stability

The ready-to-consume food product was processed to insure microbiological stability throughout shelf life ("commercial sterility"). Commercial sterility means the absence of microorganisms capable of growing in the ready-to-consume food product at normal, non-refrigerated conditions at which the food is likely to be held during manufacture, distribution, and storage.

Sterilisation can be achieved by either sterilisation of the packaging and ready-to-consume food product separately, known as Ultra High Temperature (UHT)-aseptic filling; or by sterilisation of the packaging and ready-to-consume food product together, known as retort.

UHT treatment is achieved by a treatment: (i) involving a continuous flow of heat at a high temperature for a short time (for example, a temperature above 135°C in combination with a suitable holding time) such that there are no viable microorganisms or spores capable of growing in the treated product when kept in aseptic packaging at ambient temperature, and (ii) sufficient to ensure that the ready-to-consume food product remains microbiologically stable after incubating for 15 days at 30°C in closed packaging or for seven days at 55°C in closed packaging or after any method demonstrating that the appropriate heat treatment has been applied.

UHT treatment can also be sub divided into direct and indirect heating. Direct heating can be subdivided further into direct steam injection and steam infusion. Indirect heating can involve either plate or tubular heat exchangers. Direct heating is recognised as a less invasive technology than indirect, resulting in less heat abuse of the products, due to the faster heating. As the nature of the ready-to-consume food product is to maintain the highest sensory benefits of the products, direct heating and more specifically direct steam infusion is the preferred thermal process to apply to these products. In general typical heat treatments will involve an F0 of 3 - 12, across all sterilisation processes, where F0 is the equivalent thermal process to holding the product at 121.1°C for 1 minute.

A horizontal method for enumeration of microorganisms that are able to grow and form colonies in a solid medium after aerobic incubation at 30°C was conducted according to ISO 4833-1:2013. The method is applicable to products intended for human consumption, animal feed, and environmental samples in the area of food and feed production and handling.

ISO 4833-1:2013 is applicable to products when a limit of detection is below 102/g or 102/ml for liquid samples and milk and milk products likely to contain spreading Bacillus spp.

Enumeration was conducted by ALS Life Sciences Ltd, and an aerobic colony count of <10 CFU/g based on ISO 4833-1: 2013 was determined, indicating the ready-to-consume food product was microbiological stable.

### Example 3

### Solid-phase micro-extraction (SPME) analysis

Two ready-to-consume food product samples were analysed for volatile compounds by headspace solid phase micro-extraction (HS-SPME) gas chromatography mass spectrometry (GCMS) at different time points (0/T1, 2/T2, 4/T3 and 7/T4 months). 4g of sample was added to a 20 ml screw capped SPME vial and equilibrated to 40°C for 10 mins with pulsed agitation of 5 sec at 500 rpm. Sample introduction was accomplished using a Shimadzu AOC 5000 Autosampler. A single 50/30 µm CarboxenTM/divinylbenzene/polydimethylsiloxane (DVB/CAR/PDMS) fibre was used. The SPME fibre was exposed to the headspace above the samples for 20 min at depth of 1 cm at 40°C. The fibre was retracted and injected into the GC inlet and desorbed for 2 min at 250°C. Injections were made on a Shimadzu 2010 Plus GC with an Agilent DB-624 UI (60m x 0.32mm x 1.8µm) column using a split/splitless injector with a 1/10 split. A merlin microseal was used as the septum. The temperature of the column oven was set at 40°C, held for 5 min, increased at 5°C/min to 230°C then increased at 15°C/min to 260°C, held for 5 min yielding at total GC run time of 65 min. The carrier gas was helium held at a constant flow of 1.2ml/min. Spectral deconvolution was also performed to confirm identification of compounds using AMDIS.

T1.2 refers to a control beverage made using milk protein isolate powder and T1.3 refers to a control beverage made using milk protein isolate liquid retentate in accordance with the invention.

**Table 1A. Results of SPME analysis on UHT beverage (Abundance).**

| **Compound** | **S4 T1.2(T1)** | **S4 T1.2(T2)** | **S4 T1.2(T3)** | **S4 T1.2(T4)** | **S4 T1.3(T1)** | **S4 T1.3(T2)** | **S4 T1.3(T3)** | **S4 T1.3(T4)** |
|---|---|---|---|---|---|---|---|---|
| **Acetald ehyde** | 50667 | 14013 | 47419 | 12413 | 41834 | 19475 | 44014 | 13245 |
| **2-Methylp ropanal** | 130649 | 105862 | 32923 | 34530 | 132136 | 93814 | 24294 | 25407 |
| **Pentana I** | 40095 | 38226 | 17967 | 12489 | 52888 | 40263 | 38051 | 10560 |
| **Hexanal** | 47140 | 50841 | 21616 | 20803 | 27931 | 26165 | 15467 | 13512 |
| **Heptana I** | 11125 | 9633 | 3446 | 4193 | 6128 | 4861 | 2168 | 2435 |
| **Benzald ehyde** | 60659 | 67759 | 23864 | 40566 | 30725 | 40033 | 16511 | 21594 |
| **Octanal** | 20068 | 14220 | 5366 | 5383 | 0 | 0 | 2133 | 1830 |
| **Nonanal** | 23413 | 14659 | 5532 | 7197 | 12252 | 8124 | 3123 | 6569 |
| **Acetone** | 1946225 | 1892239 | 615200 | 514755 | 1631346 | 1522322 | 420595 | 325283 |
| **2-Butano ne** | 1837399 | 2174617 | 725286 | 824517 | 1667629 | 1912359 | 612042 | 654999 |
| **2-Pentano ne** | 0 | 9840 | 6233 | 0 | 83221 | 103753 | 43656 | 57278 |
| **2-Hexano ne** | 0 | 12214 | 7941 | 8990 | 10802 | 15707 | 7996 | 13338 |
| **2-Heptano ne** | 20029 | 22835 | 10073 | 18666 | 177687 | 231008 | 109800 | 170671 |
| **Methan ethiol** | 17220 | 35912 | 12197 | 16944 | 18712 | 66596 | 10055 | 19671 |
| **Dimethy I disulfid e** | 353926 | 368196 | 192216 | 254326 | 182853 | 251804 | 153493 | 161906 |
| **Dimethy I trisulfid** | 21020 | 18818 | 14556 | 13356 | 6186 | 7778 | 9063 | 9056 |
| **e Furan** | 6226 | 5865 | 2113 | 3115 | 5142 | 3569 | 422 | 1392 |
| **2-Methylf uran** | 1747 | 3391 | 1556 | 2278 | 7301 | 13392 | 5642 | 6085 |
| **2-Ethylfur an** | 0 | 5408 | 1716 | 4513 | 0 | 3795 | 1843 | 2936 |
| **2-Pentylfu ran** | 10938 | 12419 | 6500 | 10191 | 7494 | 7869 | 4071 | 7012 |
| **à-Pinene** | 19545 | 8698 | 3928 | 2877 | 14035 | 6654 | 2580 | 1682 |
| **D-Limone ne** | 12219 | 6858 | 1591 | 1462 | 5869 | 4191 | 432 | 0 |
| **o-Cymene** | 3782 | 2850 | 1107 | 2055 | 727 | 2155 | 0 | 1474 |
| **Ethyl butanoa te** | 9225 | 10479 | 5231 | 7970 | 5892 | 7313 | 4583 | 5112 |
| **Total peak area** | **4723866** | **4930339** | **1885312** | **1830095** | **4196570** | **4417800** | **1641703** | **1533048** |

**Table 1B. Results of SPME analysis on UHT beverage (Relative Response %).**

| **Compo und** | **S4 T1.2(T1)** | **S4 T1.2(T2)** | **S4 T1.2(T3)** | **S4 T1.2(T4)** | **S4 T1.3(T1)** | **S4 T1.3(T2)** | **S4 T1.3(T3)** | **S4 T1.3(T4)** |
|---|---|---|---|---|---|---|---|---|
| **Acetald ehyde** | 1.07 | 0.28 | 2.52 | 0.68 | 1.00 | 0.44 | 2.68 | 0.86 |
| **2-Methylp ropanal** | 2.77 | 2.15 | 1.75 | 1.89 | 3.15 | 2.12 | 1.48 | 1.66 |
| **Pentana l** | 0.85 | 0.78 | 0.95 | 0.68 | 1.26 | 0.91 | 2.32 | 0.69 |
| **Hexanal** | 1.00 | 1.03 | 1.15 | 1.14 | 0.67 | 0.59 | 0.94 | 0.88 |
| **Heptana l** | 0.24 | 0.20 | 0.18 | 0.23 | 0.15 | 0.11 | 0.13 | 0.16 |
| **Benzald ehyde** | 1.28 | 1.37 | 1.27 | 2.22 | 0.73 | 0.91 | 1.01 | 1.41 |
| **Octanal** | 0.42 | 0.29 | 0.28 | 0.29 | 0.00 | 0.00 | 0.13 | 0.12 |
| **Nonanal** | 0.50 | 0.30 | 0.29 | 0.39 | 0.29 | 0.18 | 0.19 | 0.43 |
| **Acetone** | 41.20 | 38.38 | 32.63 | 28.13 | 38.87 | 34.46 | 25.62 | 21.22 |
| **2-Butano ne** | 38.90 | 44.11 | 38.47 | 45.05 | 39.74 | 43.29 | 37.28 | 42.73 |
| **2-Pentano ne** | 0.00 | 0.20 | 0.33 | 0.00 | 1.98 | 2.35 | 2.66 | 3.74 |
| **2-Hexano ne** | 0.00 | 0.25 | 0.42 | 0.49 | 0.26 | 0.36 | 0.49 | 0.87 |
| **2-Heptano ne** | 0.42 | 0.46 | 0.53 | 1.02 | 4.23 | 5.23 | 6.69 | 11.13 |
| **Methan ethiol** | 0.36 | 0.73 | 0.65 | 0.93 | 0.45 | 1.51 | 0.61 | 1.28 |
| **Dimethy l disulfid e** | 7.49 | 7.47 | 10.20 | 13.90 | 4.36 | 5.70 | 9.35 | 10.56 |
| **Dimethy l trisulfid e** | 0.44 | 0.38 | 0.77 | 0.73 | 0.15 | 0.18 | 0.55 | 0.59 |
| **Furan** | 0.13 | 0.12 | 0.11 | 0.17 | 0.12 | 0.08 | 0.03 | 0.09 |
| **2-Methylf uran** | 0.04 | 0.07 | 0.08 | 0.12 | 0.17 | 0.30 | 0.34 | 0.40 |
| **2-Ethylfur an** | 0.00 | 0.11 | 0.09 | 0.25 | 0.00 | 0.09 | 0.11 | 0.19 |
| **2-Pentylfu ran** | 0.23 | 0.25 | 0.34 | 0.56 | 0.18 | 0.18 | 0.25 | 0.46 |
| **à-Pinene** | 0.41 | 0.18 | 0.21 | 0.16 | 0.33 | 0.15 | 0.16 | 0.11 |
| **D-Limone ne** | 0.26 | 0.14 | 0.08 | 0.08 | 0.14 | 0.09 | 0.03 | 0.00 |
| **o-Cymene** | 0.08 | 0.06 | 0.06 | 0.11 | 0.02 | 0.05 | 0.00 | 0.10 |
| **Ethyl butanoa te** | 0.20 | 0.21 | 0.28 | 0.44 | 0.14 | 0.17 | 0.28 | 0.33 |
| **Total** | 100.00 | 100.00 | 100.00 | 100.00 | 100.00 | 100.00 | 100.00 1 | 100.00 |

Compounds identification, chemical class, and average abundance values were measured (n=3). In total, 24 volatile compounds were identified consisting of aldehydes (8), ketones (5), furans (4), sulfurs (3), terpenes (3), and ester (1). The most abundant compounds in headspace of both samples were ketones (2-butanone, acetone, 2-heptanone) followed by the sulfur compound (dimethyl disufide). Majority of volatile compounds were detected at higher abundance in S4.T1.2 sample, with 2-butanone, acetone, dimethyl disulfide, benzaldehyde showing most significant differences in abundance level. Similar trends were seen in samples headspace profile at previous timepoint.

### Example 4

### Sensory characteristics

Sensory characteristics of two ready-to-consume food product samples were evaluated at 4-time points (0, 2, 4 and 7 months). Two ready-to-consume food product samples were blind presented to a trained sensory panel for quantitative descriptive analysis. An additional frozen sample, acting as the panel calibration sample was also evaluated. The objective of this evaluation was to objectively describe and quantify the sensory characteristics (appearance, aroma, flavour, taste, mouthfeel and after flavour/taste/feel) of the two ready-to-consume food product samples. The samples were compared across time (0, 2, 4 and 7 months) and a Principal Component Map of the findings was produced. All samples were served to assessors at ambient temperature. The assessors tasted the samples at ambient temperature 19°C ± 2°C. The beverages were presented to the assessors in coded cups for assessors to determine their appearance, aroma, flavour, taste, mouthfeel, afterflavour, aftertaste and afterfeel attributes.

S4 T1.2 refers to a control beverage made using milk protein isolate powder and S4 T1.3 refers to a control beverage made using milk protein isolate liquid retentate in accordance with the invention.

### Differences in sensory characteristics between the samples at 7 months

Descriptive analysis of the two ready-to-consume food product samples was carried out using a vocabulary of 32 attributes, of which 18 differentiated between the samples at 7 months storage.
- T3 was darker in colour (had higher 'brown' colour).
- T2 had significantly higher levels of overall (aroma/flavour/after-flavour/taste), brothy (aroma/flavour), emulsion paint (aroma/flavour) and malty (aroma/flavour). This sample was also more viscous.
- T3 was differentiated by significantly higher levels of processed milk (aroma/flavour), creamy/fresh cream (aroma/flavour), burnt (aroma/favour), as well as green flavour.

### Differences in sensory characteristics between the samples across time (0, 2, 4 and 7 months)

The first principal component which separated the samples into two groups (T2 at all time points and T3 at all time points) accounted for the majority (88%) of the variance between the samples. Storage time was not influential in differentiating between samples in this sample set.

T2 samples were described by their darker colour, overall aroma/flavour/after-flavour/taste, brothy aroma/flavour/afterflavour, emulsion/paint aroma/flavour, malty aroma/flavour and viscous mouthfeel.

T3 samples were described by their processed milk aroma/flavour, creamy/fresh cream aroma/flavour, burnt aroma/flavour, green flavour and nutty flavour.

### Sensory Panel

A qualified descriptive panel of 8 assessors, experienced in the sensory analysis of a range of products including UHT beverages was used for this evaluation.

### Descriptive Analysis Protocol

The protocol for testing was divided into three distinct phases:
Phase 1 (Orientation and lexicon development):
During the panel orientation phase, assessors tasted the beverages and formulated a lexicon of descriptive appearance, aroma, flavour, taste, mouthfeel and after-flavour/taste attributes to describe them. A final vocabulary of 1 appearance, 9 aromas, 9 flavours, 1 taste, 3 mouthfeel, 7 afterflavour/taste, 2 afterfeel were determined.

**Table 2. Lexicon of descriptive appearance, aroma, flavour, taste, mouthfeel and after-flavour/taste attributes**

| Attribute | Modality: | Definition: |
|---|---|---|
| Colour | Appearance | From white to light brown. |
| Overall | Aroma/flavour/aftertastes & afterflavours | The combined intensities for all perceived aromas/flavours/aftertastes & afterflavours. |
| Processed milk | Aroma/flavour/afterflavour | Aroma/flavour/afterflavour associated with milk that has been processed further (reminiscent of a mixture of condensed & UHT milks). |
| Nutty | Aroma/flavour/afterflavour | Aroma/flavour/afterflavour associated with nuts. |
| Brothy | Aroma/flavour/afterflavour | Aroma/flavour/afterflavour associated with broth (meaty/savoury/vegetable notes). |
| Creamy/fresh cream | Aroma/flavour/afterflavour | Aroma/flavour/afterflavour associated with fresh cream (Tesco Fresh Cream). |
| Burnt | Aroma/flavour | Aroma/flavour associated with burnt milk. |
| Green note | Aroma/flavour | Aroma/flavour reminiscent of grass. |
| Emulsion/paint | Aroma/flavour | Aroma/flavour reminiscent of emulsion paint. |
| Malty | Aroma/flavour/afterflavour | Aroma/flavor associated with malted cereal/grain. Tesco malted milk cookies. |
| Sweet | Taste/aftertaste | The basic sweet taste associated with sucrose. |
| Chalky/powdery | Mouthfeel/afterfeel | A powdery coating in the mouth. |
| Astringent | Mouthfeel | The complex of drying, puckering and shrinking sensations in the oral cavity causing contraction of the body tissues. |
| Viscosity | Mouthfeel | Viscosity of the liquid felt in the mouth - the thickness of the drink (water low, thick cream high). |
| Drying | Afterfeel | Perception of dryness left in the mouth. |

Phase 2 (Sample Calibration):
Values for the calibration sample T1.3 (frozen calibration) were discussed and agreed between assessors.
Phase 3 (Sample Testing):
The ready-to-consume food product samples were evaluated in triplicate during 3 separate sessions. For each session, a total of 4 samples were tasted, which included the two ready-to-consume food product samples, the panel calibration sample (T1.3 frozen calibration), as well as a warm-up sample. The first sample assessed in each session was the warm-up sample, whose results were discarded. Presentation order for the remaining samples was balanced to account for first position and carry-over effects.

All samples were coded with randomly selected three-digit codes and served 'blind' to assessors. Samples were tested as follows; assessors evaluated the aroma of the sample, followed by its appearance. They then sipped the sample and evaluated the flavour, taste and mouthfeel attributes. A final sip was taken, and assessors waited for exactly 45 seconds before assessing the afterflavour/taste/feel attributes.

Each assessor was provided with warm water as a palate cleanser and unsalted crackers to cleanse their palate between samples and had a five-minute break between samples. The sensory attributes of the products were scored on unstructured 10 cm line scales labelled at both ends with extremes of each descriptive term. A list of definitions for each of the attributes included in the final vocabulary was also available to each panellist. Assessments were conducted at a sensory laboratory.

### Results

Panel scores from descriptive sensory analysis were subjected to Analysis of Variance (ANOVA) at a 5% (p<0.05) level of significance to determine which terms were effective at differentiating between the samples at 7 months.

To compare the samples across the four time points, Analysis of Variance (ANOVA was carried out between samples throughout storage for 0, 2, 4 and 7 months. Descriptive terms which did not significantly discriminate (p < 0.05) between the samples were removed from subsequent analyses. Principal Component Analysis (PCA) was performed using Unscrambler^{®} v 10.3 (CAMO AS, Oslo, Norway). PCA was used to identify the factors responsible for the similarities and differences between the sensory characters of the samples.

**Table 3. Panel scores from descriptive sensory analysis**

| **Samples** | **T2 (at time point 4 7 months)** | **T3 (at time point 4 (7 months)** | **p-value**** |
|---|---|---|---|
| **Attributes** | **Scores*** | **Scores*** | |
| Colour | 4.7 ^{a} | 4.0 ^{b} | <.0001 |
| Overall aroma | 7.3 ^{a} | 6.4 ^{b} | <.0001 |
| Processed milk aroma | 5.5 ^{b} | 6.3 ^{a} | 0.0005 |
| Nutty aroma | 2.6 | 2.7 | D.5235 |
| Brothy aroma | 2.7 ^{a} | 1.9 ^{b} | 0.0003 |
| Creamy/fresh cream aroma | 2.4 ^{b} | 3.5 ^{a} | <.0001 |
| Burnt aroma | 1.5 ^{b} | 2.5 ^{a} | 0.0006 |
| Green aroma | 0.7 | 0.8 | D.4475 |
| Emulsion/paint aroma | 2.4 ^{a} | 1.8 ^{b} | <.0001 |
| Malty aroma | 2.5 ^{a} | 1.6 ^{b} | 0.0014 |
| Overall flavour | 7.4 ^{a} | 6.8 ^{b} | 0.0007 |
| Processed milk flavour | 6.0 ^{b} | 6.6 ^{a} | 0.0011 |
| Nutty flavour | 2.8 | 3.0 | 0.3506 |
| Brothy flavour | 2.4 ^{a} | 1.7 ^{b} | 0.0001 |
| Creamy/fresh cream flavour | 3.3 ^{b} | 4.4 ^{a} | <.0001 |
| Burnt flavour | 1.4 ^{b} | 2.4 ^{a} | 0.0002 |
| Green flavour | 0.7 ^{b} | 1.2 ^{a} | 0.0067 |
| Emulsion/paint flavour | 2.3 ^{a} | 1.6 ^{b} | 0.0003 |
| Malty flavour | 2.1 ^{a} | 1.4 ^{b} | 0.0001 |
| Sweet taste | 5.8 | 5.6 | 0.2645 |
| Chalky/powdery mouthfeel | 3.3 | 3.1 | 0.0941 |
| Astringent mouthfeel | 3.1 | 3.0 | D.5224 |
| Viscosity mouthfeel | 3.6 ^{a} | 2.7 ^{b} | 0.0004 |
| Overall after-flavour/taste | 4.0 ^{a} | 3.5 ^{b} | 0.0069 |
| Processed milk afterflavour | 2.9 | 3.0 | 0.3840 |
| Nutty afterflavour | 2.0 | 2.0 | 0.7615 |
| Brothy afterflavour | 1.1 | 1.1 | 0.1368 |
| Creamy/fresh cream afterflavour | 2.3 | 2.1 | 0.3993 |
| Malty aflerflavour | 1.0 | 0.9 | 0.4320 |
| Sweet aftertaste | 3.4 | 3.3 | 0.8690 |
| Chalky/powdery afterfeel | 2.6 | 2.4 | 0.3261 |
| Drying afterfeel | 2.8 | 2.7 | 0.7645 |

| | | | |
|---|---|---|---|
| *Average score of 8 assessors measuring attributes on defined 10cm line scales. **Significance declared at the level ps0.06. | | | |

These results show the average sensory scores for the 32 attributes measured for the samples. Following on from this table the key significant attributes are highlighted, and the attributes are graphically illustrated in the accompanying drawings.

The assessors differentiated between the beverages in terms of 18 of the 32 attributes measured.

### Appearance

- T3 was darker in colour (had higher 'brown' colour).

### Aroma

- The aroma attributes nutty or green did not differentiate between the samples.
- The overall aroma of T2 was significantly higher than that of T3.
- Levels of brothy, emulsion/paint and malty aroma were significantly higher in T2 when compared to T3.
- T3 was differentiated by significantly higher levels of processed milk, creamy/fresh cream and burnt aroma.

### Flavour/taste

- The samples were not differentiated by nutty flavour.
- Levels of overall flavour, brothy, emulsion/paint and malty flavour were significantly higher in T2.
- Levels of processed milk, creamy/fresh cream, burnt and green flavour were significantly higher in T3.
- The samples were not differentiated by their sweet taste.

### Mouthfeel/afterfeel

- There were no differences in chalky/powdery mouthfeel/afterfeel, astringent mouthfeel or drying afterfeel characteristics between the samples.
- T2 was significantly more viscous than T3.

### After flavour/taste

- T2 had a significantly higher overall after-flavour/taste than T3, otherwise none of the other afterflavour/tastes/feels differentiated between the samples.

**Table 4. Average sensory scores for the 32 attributes measured for the samples across storage time at 0, 2, 4 and 7 months**

| **Samples** | **T2@0m** | | **T2@2m** | | **T2@4m** | | **T2@7m** | **T3@0m** | **T3@2m** | **T3@4m** | **T3@7m** | **p-value**** |
|---|---|---|---|---|---|---|---|---|---|---|---|---|
| **Attributes** | **Scores*** | | **Scores*** | | **Scares*** | | **Scores*** | **Scores*** | **Scores*** | **Scores*** | **Scores*** | |
| Colour | 4.2 ^{bc} | | 4.3 ^{b} | | 4.0 ^{c} | | 4.7 ^{a} | 3.1 ^{e} | 3.5 ^{d} | 3.3 ^{e} | 4.0 ^{a} | <.0001 |
| Overall aroma | 6.9 ^{b} | | 7.1 ^{ab} | | 7.0 ^{b} | | 73 ^{a} | 6.2 ^{a} | 64 ^{a} | 62 ^{a} | 64 ^{a} | <.0001 |
| Processed milk aroma | 5.3 ^{a} | | 5.3 ^{a} | | 5.5 ^{a} | | 55 ^{a} | 60 ^{b} | 6 1 ^{ab} | 6.2 ^{a} | 6.3 ^{a} | <.0001 |
| Nutty aroma | 2.7 | | 2.5 | | 24 | | 2.6 | 3.2 | 2.9 | 2.8 | 2.7 | 0.0585 |
| Brothy aroma | 2.6 ^{ab} | | 2.4 ^{b} | | 2.7 ^{a} | | 2.7 ^{ab} | 1.8 ^{c} | 1.9 ^{c} | 1.7 ^{c} | 1.9 ^{c} | <.0001 |
| Creamy/fresh cream aroma | 2.5 ^{c} | | 2.2 ^{c} | | 2.4 ^{c} | | 2.4 ^{c} | 3.2 ^{b} | 3.5 ^{a} | 3.4 ^{a} | 3.5 ^{a} | <.0001 |
| Burnt aroma | 1.5 ^{d} | | 1.3 ^{d} | | 1.2 ^{d} | | 1.5 ^{d} | 1.9 ^{c} | 2.2 ^{b} | 2.4 ^{ab} | 2.5 ^{a} | <.0001 |
| Green aroma | 1.0 | | 0.9 | | 0.8 | | 0.7 | 1.0 | 0.9 | 0.8 | 0.8 | 0.5557 |
| Emulsion/paint aroma | 2.4 ^{a} | | 2.2 ^{b} | | 2.3 ^{ab} | | 24 | 1.8 ^{c} | 1.6 ^{de} | 1.5 ^{e} | 1.8 ^{cd} | <.0001 |
| Malty aroma | 22 ^{a} | | 23 ^{a} | | 25 ^{a} | | 25 ^{a} | 1.5 ^{b} | 1.6 ^{b} | 1.7 ^{b} | 1.6 ^{b} | <.0001 |
| Overall flavour | 7.4 ^{a} | | 7.4 ^{a} | | 7.2 ^{a} | | 7.4 ^{a} | 6.5 ^{b} | 6.7 ^{b} | 6.6 ^{b} | 6.8 ^{b} | <.0001 |
| Processed milk flavour | 6.0 ^{b} | | 5.8 ^{b} | | 5.9 ^{b} | | 6.0 ^{b} | 6.5 ^{a} | 6.7 ^{a} | 6.7 ^{a} | 6.6 ^{a} | <.0001 |
| Nutty flavour | 2.7 ^{b} | | 2.7 ^{b} | | 2.6 ^{b} | | 2.8 ^{b} | 3.4 ^{a} | 3.0 ^{ab} | 3.0 ^{ab} | 3.0 ^{ab} | 0.0192 |
| Brothy flavour | 2.5 ^{a} | | 2.4 ^{a} | | 2.2 ^{a} | | 2.4 ^{a} | 1.7 ^{b} | 1.8 ^{b} | 1.6 ^{b} | 1.7 ^{b} | <.0001 |
| Creamy/fresh cream flavour | 3.2 ^{c} | | 3.4 ^{c} | | 3.1 ^{c} | | 3.3 ^{c} | 4.2 ^{b} | 4.4 ^{ab} | 4.5 ^{a} | 4.4 ^{ab} | <.0001 |
| Burnt flavour | 1.3 ^{c} | | 1.4 ^{c} | | 1.2 ^{c} | | 1.4 ^{c} | 20 ^{b} | 2.2 ^{ab} | 24 ^{a} | 24 ^{a} | <.0001 |
| Green flavour | 0.6 ^{b} | | 06 ^{b} | | 08 ^{b} | | 0.7 ^{b} | 1.2 ^{a} | 1.2 ^{a} | 1.3 ^{a} | 1.2 ^{a} | <.0001 |
| Emulsion/paint flavour | 2.4 ^{a} | | 2.3 ^{a} | | 2.2 ^{a} | | 2.3 ^{a} | 1. 7 ^{a} | 1.6 ^{b} | 1.5 ^{b} | 1. 6 ^{b} | <.0001 |
| Malty flavour | 22 ^{a} | | 2.1 ^{a} | | 2.0 ^{a} | | 2.1 ^{a} | 1 4 ^{b} | 1.5 ^{b} | 1.3 ^{b} | 1.4 ^{b} | <.0001 |
| Sweet taste | 5.6 | | 5.8 | | 56 | | 58 | 56 | 56 | 57 | 5 6 | 0.5491 |
| | | | | | | | | | | | | |
| Chalky/powdery mouth feel | | 32 | | 3.1 | | 34 | 33 | 32 | 32 | 33 | 3.1 | 0.5785 |
| Astringent mouthfeel | | 28 | | 29 | | 3.0 | 3.1 | 28 | 30 | 29 | 30 | 0.7199 |
| Viscosity mouthfeel | | 3.9 ^{a} | | 3.6 ^{b} | | 3.8 ^{ab} | 3.6 ^{b} | 3.0 ^{c} | 2.8 ^{cd} | 2.7 ^{d} | 2.7 ^{d} | <.0001 |
| Overall after-flavour/taste | | 4.0 ^{a} | | 3.9 ^{a} | | 4.0 ^{a} | 4.0 ^{a} | 3.5 ^{b} | 3.5 ^{b} | 3.4 ^{b} | 3.5 ^{b} | 0.0008 |
| Processed milk afterflavour | | 3.0 | | 3.2 | | 3.0 | 2.9 | 3.0 | 3.1 | 3.2 | 3.0 | 0.8073 |
| Nutty afterflavour | | 2.1 | | 2.1 | | 1.9 | 2.0 | 2.0 | 1.9 | 1.9 | 2.0 | 0.9098 |
| Brothy afterflavour | | 1.3 ^{a} | | 1.2 ^{ab} | | 1.0 ^{cd} | 1.1 ^{abc} | 1.1 ^{abc} | 0.8 ^{d} | 1.0 ^{bed} | 1.1 ^{abc} | 0.0026 |
| Creamy/fresh cream afterflavour | | 23 | | 23 | | 2.1 | 23 | 23 | 24 | 22 | 2.1 | 02037 |
| Malty afterflavour | | 1.1 | | 1.0 | | 1.2 | 1.0 | 1.0 | 09 | 11 | 0.9 | 0.3671 |
| Sweet aftertaste | | 34 | | 3.5 | | 3.3 | 3.4 | 3.3 | 3.4 | 3.5 | 3.3 | 0.8919 |
| Chalky/powdery afterfeel | | 2.6 | | 2.7 | | 2.5 | 2.6 | 2.5 | 2.5 | 2.6 | 2.4 | 0.5076 |
| Drying afterfeel | | 27 | | 27 | | 29 | 28 | 26 | 2.8 | 28 | 2.7 | 0.5600 |

| | | | | | | | | | | | | |
|---|---|---|---|---|---|---|---|---|---|---|---|---|
| 2*Average score of 8 assessors measuring attributes on defined 10cm line scales. **Significance declared at the level p≤0.05. | | | | | | | | | | | | |

These results show the average sensory scores for the 32 attributes measured for the samples across storage time at 0, 2, 4 and 7 months. The significant attributes are highlighted below, and the attributes are graphically illustrated in the accompanying drawings.

The assessors differentiated between the beverages in terms of 20 of the 32 attributes measured across the 4 timepoints.

### Appearance

- Both samples remained light/white in colour throughout the 7 months storage. At each time point T3 was significantly whiter than T2. At 7 months storage T2 was the darkest sample. The colour of T2 at 4 months was the same as the colour of T3 at 7 months.

### Aroma

- Green and nutty aromas for both samples remained stable throughout the storage time and did not differentiate between the samples.
- The overall aroma of T2 was significantly higher than that of T3 at each time point. While the overall aroma of T3 remained the same as the samples aged, there was a significant increase in overall aroma for T2, most noticeably between 0- and 7-months storage.
- Levels of brothy, emulsion/paint and malty aroma were significantly higher in T2 when compared to T3 at each time point and throughout storage.
- Levels of processed milk, creamy/fresh cream and burnt aroma were significantly higher in T3 when compared to T2 at each time point and throughout storage.

### Flavour/taste

- Levels of overall flavour, brothy, emulsion/paint and malty flavour were significantly higher in T2 at each time point. There were no differences for either sample as they aged.
- Levels of processed milk and green flavour were significantly higher in T3 at each time point. There were no differences for either sample as they aged.
- The samples were differentiated by nutty flavour at 0 months only. T3 at 0 months was significantly nuttier than T2 (for all storage times). No significant difference between storage times for either sample.
- Creamy/fresh cream flavour of T2 remained significantly lower than that of T3 throughout storage and did not change as the sample aged.
- At each individual timepoint T3 was significantly more burnt than that of T2. Burnt flavour of T2 did not change as the sample aged. Burnt flavour of T3 increased significantly throughout storage. T3 at 4 and 7 months was significantly more burnt than T3 at 0 months.
- The samples were not differentiated by their sweet taste.

### Mouthfeel/afterfeel

- There were no differences in chalky/powdery mouthfeel/afterfeel, astringent mouthfeel or drying afterfeel characteristics between the samples.
- Viscosity differentiated between the samples both at each time point (T2 was significantly more viscous) and throughout storage (viscosity decreased for each sample as they aged).

### After flavour/taste

- T2 had a significantly higher overall after-flavour/taste than T3 at each time point. There were no significant changes in overall after-flavour/taste for either sample as they aged.
- Brothy afterflavour differentiated between the samples. T2 at 0 months was the strongest in this attribute, while T3 at 2 months was the weakest.
- None of the other afterflavour/tastes/feels differentiated between the samples.

### Principal Component Analysis

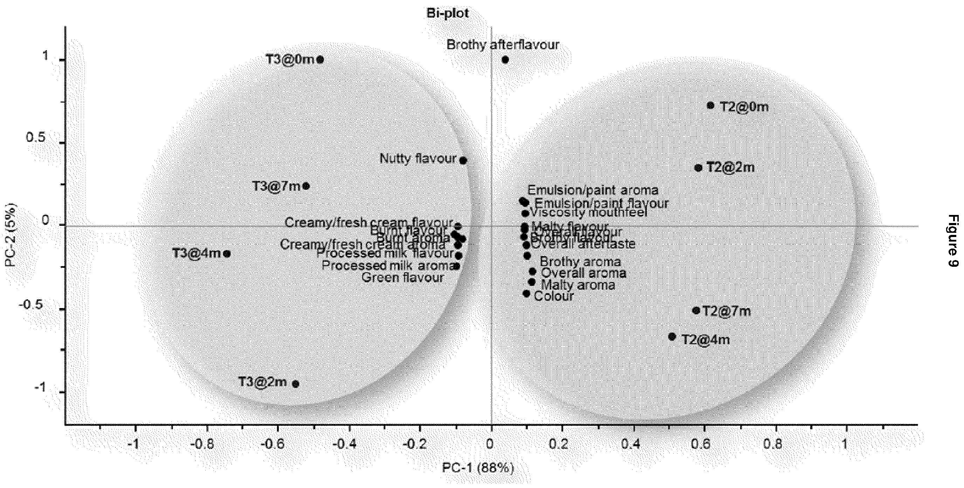

The scores and loading biplot generated from the Principal Component Analysis (PCA) of the data are illustrated in Figure 9. The first two PCs accounted for 88% and 5% of the variance between the samples respectively.

The first principal component separated the samples into two groups (T2 at all time points and T3 at all time points).

T2 samples were described by their darker colour, overall aroma, flavour & after-flavour/taste, brothy aroma, flavour & after-flavour/taste, emulsion/paint aroma & flavour, malty aroma & flavour and viscous mouthfeel.

T3 samples were described by their processed milk aroma & flavour, creamy/fresh cream aroma & flavour, burnt aroma & flavour, green flavour and nutty flavour.

Storage time was not influential in differentiating this sample set.

The 2nd principal component which accounted for a very small amount of the variance between the samples separated them based on levels of brothy after flavour.

## Claims

1. A method of preparing a ready-to-consume food product, the method comprising:
(a) providing a liquid protein concentrate;
(b) adding fat to the liquid protein concentrate; and
(c) adding a dairy ingredient to the liquid protein concentrate.

2. A method according to Claim 1, wherein the liquid protein concentrate is a liquid skim dairy milk protein concentrate.

3. A method according to Claim 1 or 2, wherein the liquid protein concentrate has a fat content of 0.1% (w/v).

4. A method according to any one of Claims 1-3, wherein the liquid protein concentrate has a lactose content of less than 2% (w/v).

5. A method according to any one of Claims 1-4, wherein the liquid protein concentrate has a protein content greater than 20% (w/v) of the liquid protein concentrate.

6. A method according to any one of Claims 1-5, wherein the fat is a vegetable oil.

7. A method according to any one of Claims 1-6, wherein the adding fat step comprises adding fat in an amount of 3-4% (w/v) of the liquid protein concentrate.

8. A method according to any one of Claims 1-7, wherein the dairy ingredient is cream.

9. A method according to any one of Claims 1-8, wherein the dairy ingredient is cream having a fat content of 48-53% (w/v).

10. A method according to any one of Claims 1-9, wherein the dairy ingredient is cream having a protein content greater than 1.0% (w/v).

11. A method according to any one of Claims 1-10, wherein the adding a dairy ingredient step comprises adding a dairy ingredient in an amount of 4-5% (w/v) of the liquid protein concentrate.

12. A method according to any one of Claims 1-11, wherein the method further comprises the step of heating the liquid milk protein concentrate at a temperature of greater than 140°C for a period of at least 30 seconds.

13. A ready-to-consume food product prepared by a method according to any one of Claims 1-12.

14. A ready-to-consume food product according to Claim 13, wherein the ready-to-consume food product has an energy content of at least 100 kcal per 100ml, a fat content of 15-35% (w/v), a protein content of 20-40% (w/v), a protein:fat ratio of at least 0.5:1.0, a protein:dairy ingredient ratio of at least 1.0:1.0, a carbohydrate content of 20-50% (w/v), a lactose content of less than 2% (w/v), and/or a total solids content of 20-40% (w/v).

15. A food item comprising a ready-to-consume food product according to Claim 13 or 14.
